**Europäisches Patentamt**

**European Patent Office**

**Office européen des brevets**

(19)

(11) Veröffentlichungsnummer : **0 225 315
B1**

(12) **EUROPÄISCHE PATENTSCHRIFT**

(45) Veröffentlichungstag der Patentschrift :
07.03.90

(21) Anmeldenummer : 86890333.7

(22) Anmeldetag : 02.12.86

(51) Int. Cl.⁵ : **H 01 M   2/18**, H 01 M 10/36

(54) Galvanisches Element.

(30) Priorität : 02.12.85 AT 3493/85

(43) Veröffentlichungstag der Anmeldung :
10.06.87 Patentblatt 87/24

(45) Bekanntmachung des Hinweises auf die Patenterteilung : 07.03.90 Patentblatt 90/10

(84) Benannte Vertragsstaaten :
BE CH DE ES FR GB GR IT LI LU NL SE

(56) Entgegenhaltungen :
EP—A— 0 130 723
US—A— 3 773 590
US—A— 4 158 085
US—A— 4 194 961
US—A— 4 276 110
US—A— 4 403 024

(73) Patentinhaber : S.E.A. Studiengesellschaft für Energiespeicher und Antriebssysteme Gesellschaft
m.b.H.
Bleckmanngasse 10 Postfach 49
A-8680 Mürzzuschlag (AT)

(72) Erfinder : Tomazic, Gerd, Dr. Dipl.-Ing.
Hofkirchergasse 4
A-8680 Mürzzuschlag (AT)

(74) Vertreter : Widtmann, Georg, Dr.
S.E.A. Studiengesellschaft für Energiespeicher und
Antriebssysteme Gesellschaft m.b.H. Postfach 49
Bleckmanngasse 10
A-8680 Mürzzuschlag (AT)

## Beschreibung

Die Erfindung bezieht sich auf ein galvanisches Element, insbesondere elektrisch nachladbares Zink/Brom-Sekundärelement.

Es ist ein Zink/Brom-Element bekannt, das im wesentlichen aus Polypropylen aufgebaut ist. Die Elektroden sind aus mit Ruß gefülltem Polypropylen aufgebaut und weisen eine glatte Oberfläche auf, wohingegen die ebenfalls aus Polypropylen aufgebauten Separatoren mit Noppen versehen sind, welche als Distanzhalter gegenüber den Elektroden dienen. Die Elektroden und Separatoren sind in ihren äußeren Rändern flüssigkeitsdicht miteinander verbunden, wobei an den Rändern Verdickungen ausgebildet sein können, die im wesentlichen der Höhe der Noppen entsprechen, sodaß Elektrolyträume mit durchgehend gleichbleibendem Querschnitt gebildet werden. Diese so ausgebildeten Elektrolyträume weisen jeweils eine Zutritt- und eine Austrittöffnung für den im Kreislauf geführten Elektrolyten auf, wobei zwei Elektrolytkreisläufe und zwar für den Anoden- und für den Kathodenraum getrennt vorgesehen sind. Im Elektrolyt ist als elektrochemisch wirksame Substanz Zinkbromid vorgesehen, wobei das bei der Aufladung gebildete Brom durch einen Komplexbildner gebunden wird, welcher mit dem Brom eine oleophile Phase bildet, die sich von dem wässrigen Elektrolyten im Sammelraum abscheidet, sodaß im Elektrolyt-Sammelraum zwei Phasen vorgesehen sind. Nachteilig bei einer derartigen Batterie ist, daß die Noppen der Separatoren, welche ebenfalls wie das Separator-Material permeable ausgeführt sind, bereits durch die Elektrolyt-Flüssigkeit elektrisch leitfähig werden, womit sie in den elektrolytischen Abscheidungsvorgang, insbesondere von Zink, aktiv eingeschlossen werden können.

Ein Beispiel für derartige Separatoren ist in der EU A2 0130 723 beschrieben.

Batterieseparatoren mit porigen Distanzhaltern werden auch aus den US-A1 3,773.590 und US-A1 4,403.024 bekannt. Bei ihrer Herstellung werden auf einem Vlies aus Polypropylenfasern Rippen aus geschäumten Material aufgebracht aus dem sodann der Weichmacher ausgelaugt wird.

Metalle und auch insbesondere Zink neigen jedoch bei der elektrolytischen Abscheidung zu Dendritenbildung, d. h. daß das Metall nicht in gleichförmigen Schichten abgeschieden wird, sondern daß an einzelnen lokalen Stellen länglich ausgebildete Kristalle auftreten. Sind nun derartige Kristalle, welche sehr bevorzugt bei den Noppen der Separatoren auftreten, da dort der Abstand zur Elektrode am geringsten ist, vorhanden, so kann es zu einem Durchwachsen dieser Dendriten in dem Separator kommen, wodurch eine direkte elektrische Leitung, vornehmlich erster Ordnung, zwischen den Elektrolyträumen gebildet werden kann, die zur Kurzschlußbildung zwischen zwei aneinandergrenzenden Elektrolyträumen, und zwar Anolyt- und Katholytraum führt. Diese Kurzschlußbildung kann einerseits durch die Exothermizität der Reaktion zwischen Zink und Brom zur Schädigung des Separators, andererseits zu einer nicht vollständigen Auflösung des Zinks im Separatorinneren führen, da bei der Entladung der Teil des Dendriten, welcher in den Separator gewachsen ist, schlechter aufgelöst wird, als der außerhalb des Separators gewachsene Dendrit, welcher Vorgang durch die unterschiedliche Diffusion begründet ist, sodaß Zink-Reste im Separator verbleiben, die einerseits eine elektrische Verbindung erster Ordnung zwischen zwei unterschiedlichen Elektrodenräumen weiterhin bedingen können, und andererseits bereits als Keime für die bevorzugte Dendritenausbildung wirken.

Aus den US-A1 4,158.085, 4,194.961 und 4,276.110 werden verschiedene Distanzhalter bekannt, welche an den Elektroden von galvanischen Zellen für die Abscheidung von Metall dienen, angeordnet sind. Diese Distanzhalter sorgen für einen gleichmäßigen Abstand zwischen den Elektroden, wobei keine elektrochemisch aktive Separatoren vorgesehen sind.

Die vorliegende Erfindung hat sich nun zum Ziel gesetzt, ein galvanisches Element zu schaffen, das bei möglichst einfacher Ausbildung die oben angeführten Nachteile der Durchwachsung des Separators durch Dendriten und Kurzschlußbildung vermeidet, und gleichzeitig eine besonders einfache Ausbildung des galvanischen Elementes erlaubt, wobei gleichförmig ausgebildete Elektrolyträume, also Elektrolyträume mit im wesentlichen gleichbleibendem Querschnitt ohne Verwerfungen der Elektroden bzw. Separatoren erhalten werden können.

Das erfindungsgemäße galvanische Element, insbesondere Zink/Brom-Sekundärelement mit einer Vielzahl von mit organischem Kunststoff gebundenem Kohlenstoff, z. B. Ruß, aufgebauten, insbesondere bipolaren Elektroden, einer Vielzahl von semipermeablen Separatoren, wobei zwischen Separatoren und Elektroden jeweils Elektrolyträume für die umlaufende, z. B. aus Vorratsbehältern umgepumpte Elektrolytflüssigkeit mit Zufluß- und Abflußöffnungen vorgesehen sind, in welchen Räumen sich Distanzhalter quer zur Separator- und Elektrodenflächen erstrecken, besteht im wesentlichen darin, daß die Distanzhalter jeweils mit einer elektrisch leitenden Elektrode verbunden sind und elektrisch nichtleitend aufgebaut sind.

Es hat sich völlig überraschend herausgestellt, daß bei elektrisch nichtleitenden Distanzhaltern, also einem Material, das sowohl kein elektrischer Leiter erster Ordnung als auch so ausgebildet ist, daß es im wesentlichen keine Elektrolytflüssigkeit aufnehmen kann, ein unerwünschtes bevorzugtes Dendritenwachstum im Bereich der Distanzhalter vermieden ist, wodurch thermische Schädigung des Separatormaterials, Kurzschlußbildungen und dgl. Kapazitätsverluste nicht mehr auftreten.

Gemäß einem weiteren Merkmal der vorliegenden Erfindung ist eine Vielzahl der bipolaren Elektroden ident ausgebildet, mit Distanzhaltern versehen, die an einer Elektrode im wesentlichen einander gegenüber angeordnet sind, welche vorzugsweise an einer Fläche idente Form, jedoch unterschiedliche Form an der anderen Fläche aufweisen.

Sind die Distanzhalter an beiden Seiten der Elektrode am selben Ort angeordnet, und die Elektroden so eingebaut, daß diese Distanzhalter der Vielzahl der Elektroden sich gegenseitig abstützen, also so durch die Batterie hindurch gegenseitig abstützen, so können besonders gleichförmig ausgebildete Elektrolyträume erreicht werden, welche homogene Strömungsbedingungen schaffen.

Weisen gleichzeitig die Distanzhalter, insbesondere Noppen unterschiedliche Gestalt auf, so wird den unterschiedlichen Diffusionsvorgängen in den einzelnen Elektrolyträumen und auch der Dendriten-Bildung besonders günstig entgegengewirkt.

Eine besonders einfach ausgebildete Elektrode wird dann erhalten, wenn die Distanzhalter mit einer Elektrode jeweils materialbündig, insbesondere verschweißt augebildet sind.

Eine besonders einfache Abstützung der Separatoren und Elektroden wird dann erreicht, wenn die Distanzhalter durch im wesentlichen im Querschnitt runde, z. B. kreisrunde Fäden, welche entlang der Elektrodenfläche befestigt sind, insbesondere verschweißt sind, gebildet werden.

Die Distanzhalter können auch durch einzelne im Abstand voneinander angeordnete Noppen gebildet sein, wobei dann ein besonders hoher Anteil an elektrochemisch wirksamer Fläche der Elektrode erhalten bleibt und eine unterschiedliche Ausbildung der Noppen besonders leicht gewährleistet werden kann. Werden die Distanzhalter auf den Elektroden so angeordnet, daß Durchströmkanäle für den Elektrolyten gebildet werden, so kann eine besonders gleichmäßige Durchströmung der Elektrolyträume erreicht werden, was ebenfalls zu einer gleichmäßigen Abscheidung und auch Ablösung des Zinkfilms auf der Elektrode führt. Eine besonders gleichförmige Abscheidung des Zinkfilms ist insbesondere dann gewährleistet, wenn die elektrisch leitende Oberfläche der Elektroden im wesentlichen eben und ohne Erhebungen und Vertiefungen ausgebildet ist, womit auch bei Auflösung der Zinkschicht elektrochemisch nicht wirksamer Zinkstaub, welcher gegebenenfalls auch zur Verstopfung der feinen Durchflußkanäle führt, vermieden werden kann.

Sind die Distanzhalter aus demselben Kunststoff wie die Elektroden, insbesondere aus Polypropylen aufgebaut, so kann einerseits eine besonders günstige Verbindung zwischen Elektroden und Distanzhaltern erreicht werden, und es ist weiters ein chemisch besonders geeignetes Material zum Einsatz gebracht.

Sind die Distanzhalter von der Elektrode ausgehend, sich verjüngend ausgebildet, so wird mit sich verringerndem freien Strömungsquerschnitt durch die Zinkabscheidung der relative Strömungswiderstand insbesondere dadurch noch geringer, sodaß unterschiedliche Zinkabscheidungen, beispielsweise durch große Differenzen der Strömungsgeschwindigkeiten im Elektrolytraum besonders vorteilhaft vermieden sind.

Im folgenden wird die Erfindung anhand der Zeichnungen näher erläutert.

Es zeigen Fig. 1 eine Zink/Brom-Batterie, Fig. 2 mehrere hintereinander angeordnete Elektroden und Separatoren im Schnitt und Fig. 3 eine weitere Ausführungsform einer Elektrode.

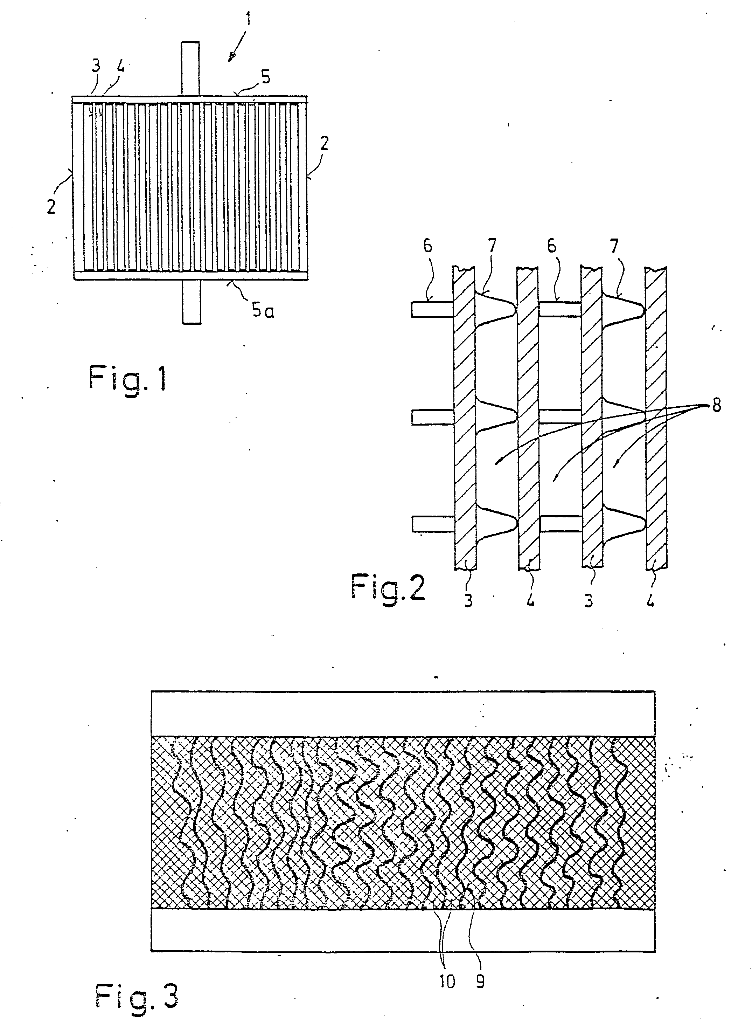

Das in Fig. 1 schematisch dargestellte galvanische Element 1 besteht aus zwei an den jeweiligen Enden angeordneten Endplatten 2, welche zur mechanischen Versteifung des Elementes dienen. Zwischen diesen Endplatten 2 sind Elektroden 3 und Separatoren 4 abwechselnd hintereinander angeordnet. Durch die Elektroden und Separatoren werden jeweils gemeinschaftlich Elektrolyträume gebildet. In diese Elektrolyträume, welche zumindest eine Zufluß- und eine Abflußöffnung aufweisen (nicht dargestellt), werden über Anschlußstücke 5 und 5a die einzelnen Räume angespeist. Ein derartiges Anspeisungs-System ist beispielsweise in der EU-A2 149 448 beschrieben.

Nicht dargestellt in der Zeichnung sind die Pumpen, die jeweils für den Anolyt- bzw. Katholytkreislauf vorgesehen sind, sowie das Vorratsgefäß für den Elektrolyten, elektrische Anschlüsse od. dgl., da sie für die vorliegende Erfindung nicht wesentlich sind.

Die in Fig. 2 im Schnitt und Ausschnitt teilweise dargestellten Elektroden 3 weisen Distanzhalter 6 und 7 auf, welche bis zu den Separatoren 4 reichen, wobei durch Separatoren und Elektroden jeweils Elektrolyträume 8 gebildet werden. Die Elektroden sind mit Ruß, welcher durch Polypropylen gebunden ist, aufgebaut, und die Distanzhalter selbst, welche im vorliegenden Fall noppenartig aufgebaut sind, bestehen aus Polypropylen. Die Elektroden sind weiters bipolar ausgebildet. Die Dicke der Elektrode beträgt 0,5 bis ca. 1 mm, wohingegen, die quer zur Oberfläche der Elektrode sich erstreckenden Distanzhalter eine Quererstreckung von 0,5 mm aufweisen. Wie ersichtlich, weisen die Distanzhalter unterschiedliche Form auf, wobei in die Elektrolyträume 8, in welche die Noppen 7 reichen, Zink an der Elektrode abgeschieden wird. Diese Distanzhalter, welche im Querschnitt im wesentlichen kreisförmig aufgebaut sind, sind noppenartig ausgebildet, wobei sie sich zum Separator hin erstreckend verjüngend ausgebildet sind, und eine stetig Veränderung des Querschnittes vorgesehen ist, sodaß keine unerwünschten Wirbelbildungen und dgl. eintreten, also durch die Distanzhalter bedingte unterschiedliche Zinkablagerung vermieden werden kann. Die Distanzhalter 6 und 7 sind, wie aus der Zeichnung besonders deutlich ersichtlich, an identen Stellen bei den Elektroden angeordnet, sodaß sich diese gegenseitig abstützen können, womit Verwerfungen vermieden sind. Die Distanzhalter sind weiters materialbündig mit der Elektrodenfläche verbunden und werden beispielsweise mittels einer Walze, welche entsprechende Vertiefungen aufweist, die jeweils mit Polypropylen gefüllt werden, aufgebracht.

Die in Fig. 3 dargestellte Elektrode weist Distanzhalter 9 auf, welche durch im Querschnitt runde Fäden gebildet sind, die in etwa sinusförmig auf der glatten Oberfläche der Elektrode angeordnet sind. Zwischen den Distanzhaltern werden einzelne Durchströmkanäle 10 für den Elektrolyten gebildet. Die Distanzhalter sind nicht entlang einer Erzeugenden mit der Elektrode, sondern lediglich punktweise verschweißt.

Es wurden zwei verschiedene Sekundärelemente gefertigt, wobei ein Sekundärelement die Separator- und Elektrodenausbildung gemäß Fig. 2 aufwies, wohingegen das weitere Sekundärelement so ausgebildet wurde, daß der Separator die Distanzhalter und zwar aus Separatormaterial aufwies. Beide Batterien wurden mit analogem Elektrolytmaterial beschickt, wobei ein Zyklus von 2250 Lade- und Entladevorgängen in analoger Weise eingehalten wurden. Nach diesem Lade- und Entladezyklus wurden beide Sekundärelemente zerlegt, wobei bei der Batterie mit der erfindungsgemäßen Ausbildung in den Elektrodenräumen keine parasitierenden Zinkstäube entdeckt werden konnten, und sowohl Separatoren als auch die Distanzhalter frei von Zinkeinwüchsen waren. Bei dem herkömmlich ausgebildeten Sekundärelement konnten in den Elektrodenräumen Zinkpartikelchen aufgefunden werden, und es wiesen die Separatoren, insbesondere die Distanzhalter dieser, dunkle Einwachsungen auf, welche dann bei der chemischen Analyse im wesentlichen als aus Zink bestehend nachgewiesen werden konnten.

**Patentansprüche**

1. Galvanisches Element, insbesondere Zink/Brom-Sekundärelement, mit einer Vielzahl von mit organischem Kunststoff gebundenem Kohlenstoff, z. B. Ruß, aufgebauten, insbesondere bipolaren, Elektroden, einer Vielzahl von Separatoren, wobei zwischen Separatoren und Elektroden jeweils Elektrolyträume für die umlaufende, z. B. aus Vorratsbehältern umgepumpte, Elektrolytflüssigkeit, mit Zufluß- und Abflußöffnungen vorgesehen sind, in welchen Räumen sich Distanzhalter quer zur Separator- und Elektrodenfläche erstrecken, dadurch gekennzeichnet, daß die Distanzhalter (6, 7, 9) jeweils mit einer elektrisch leitenden Elektrode (3) verbunden sind, und elektrisch nichtleitend aufgebaut sind.

2. Galvanisches Element nach Anspruch 1, dadurch gekennzeichnet, daß eine Vielzahl der bipolaren Elektroden (3) an ihren beiden jeweils zu den Elektrolyträumen (8) weisenden Flächen Distanzhalter (6, 7) aufweisen, die an einer Elektrode im wesentlichen einander gegenüber angeordnet sind, welche vorzugsweise eine unterschiedliche Form aufweisen.

3. Galvanisches Element nach Anspruch 1 oder 2, dadurch gekennzeichnet, daß die Distanzhalter (6, 7, 9) jeweils mit einer Elektrode materialbündig, insbesondere verschweißt ausgebildet sind.

4. Galvanisches Element nach Anspruch 1, 2 oder 3, dadurch gekennzeichnet, daß die Distanzhalter (9) durch im wesentlichen im Querschnitt runde, z. B. kreisrunde, Fäden, welche entlang der Elektrodenfläche befestigt, insbesondere verschweißt sind, gebildet sind.

5. Galvanisches Element nach einem der Ansprüche 1 bis 4, dadurch gekennzeichnet, daß die Distanzhalter (6, 7) durch einzelne im Abstand voneinander vorgesehene Noppen gebildet sind.

6. Galvanisches Element nach einem der Ansprüche 1 bis 5, dadurch gekennzeichnet, daß durch die Distanzhalter (9) im Elektrolytraum (8) Durchströmkanäle (10) für den Elektrolyten gebildet sind.

7. Galvanisches Element nach einem der Ansprüche 1 bis 6, dadurch gekennzeichnet, daß die elektrisch leitenden Oberflächen der Elektroden im wesentlichen eben ohne Erhebungen und Vertiefungen ausgebildet sind.

8. Galvanisches Element nach einem der Ansprüche 1 bis 7, dadurch gekennzeichnet, daß die Distanzhalter mit demselben Kunststoff, insbesondere aus Polypropylen, wie die Elektroden aufgebaut sind.

9. Galvanisches Element nach einem der Ansprüche 1 bis 8, dadurch gekennzeichnet, daß die Distanzhalter (6, 7) von der Elektrode ausgehend sich verjüngend ausgebildet sind.

**Claims**

1. Galvanic element, in particular a zinc/bromine secondary element comprising a plurality of, in particular bipolar, electrodes constructed from carbon, for example soot, which is bonded with an organic synthetic resin, and comprising a plurality of separators, where electrolytic chambers for the circulating electrolytic fluid, pumped for example from feed containers provided with inlet and outlet openings, are arranged between the separators and the electrodes, where spacers extend in said chambers transversely to the separator- and electrode surface, characterised in that the spacers (6, 7, 9) are each connected to an electrically conductive electrode (3) and are themselves constructed to be electrically non-conductive.

2. Galvanic element as claimed in Claim 1, characterised in that on their two surfaces which each face towards the electrolytic chambers (8), a plurality of the bipolar electrodes (3) are provided with spacers (6, 7) which are arranged fundamentally opposite one another on an electrode and which preferably possess a different shape.

3. Galvanic element as claimed in Claim 1 or 2, characterised in that the spacers (6, 7, 9) are each designed to be materially flush with an electrode, and in particular are welded thereto.

4. Galvanic element as claimed in Claim 1, 2 or 3, characterised in that the spacers (9) are formed by fibres which are fundamentally round, e. g. circular, in cross-section and which are attached, in particular welded, along the electrode surface.

5. Galvanic element as claimed in one of the Claims 1 to 4, characterised in that the spacers (6, 7) are formed by individual knobs arranged at intervals from one another.

6. Galvanic element as claimed in one of the Claims 1 to 5, characterised in that the spacers (9) form flow channels (10) for the electrolyte in the electrolytic chamber (8).

7. Galvanic element as claimed in one of the Claims 1 to 6, characterised in that the electrically conductive surfaces of the electrodes are designed to be fundamentally flat without elevations and recesses.

8. Galvanic element as claimed in one of the Claims 1 to 7, characterised in that the spacers are constructed from the same synthetic resin, in particular polypropylene, as the electrodes.

9. Galvanic element as claimed in one of the Claims 1 to 3, characterised in that the spacers (6, 7) are designed to taper away from the electrode.

**Revendications**

1. Elément galvanique, en particulier élément secondaire zinc/brome, comportant de multiples électrodes, en particulier bipolaires, fabriquées en carbone lié avec une matière plastique organique, ce carbone étant par exemple de la suie, et de multiples séparateurs, élément dans lequel, entre lesdits séparateurs et lesdites électrodes, sont prévus à chaque fois des compartiments d'électrolyte, munis d'orifices d'arrivée et de départ, pour le liquide électrolytique en circulation venant par exemple de réservoirs par pompage, compartiments dans lesquels s'étendent transversalement à la surface des séparateurs et des électrodes des pièces d'écartement, caractérisé par le fait que les pièces d'écartement (6, 7, 9) sont reliées à chaque fois à une électrode (3) électriquement conductrice et sont construites de manière à ne pas être électriquement conductrices elles-mêmes.

2. Elément galvanique selon la revendication 1, caractérisé par le fait que de multiples électrodes bipolaires (3) présentent des pièces d'écartement (6, 7) sur leurs deux surfaces orientées à chaque fois vers les compartiments (8) contenant l'électrolyte, pièces d'écartement qui sont disposées sur une électrode sensiblement vis-à-vis les unes des autres et qui présentent de préférence des formes différentes.

3. Elément galvanique selon la revendication 1 ou 2, caractérisé par le fait que les pièces d'écartement (6, 7, 9) sont réalisées à chaque fois de telle manière que leur matériau soit raccordé à une électrode, notamment par soudure.

4. Elément galvanique selon la revendication 1, 2 ou 3, caractérisé par le fait que les pièces d'écartement (9) sont formées par des fils de section sensiblement ronde, par exemple circulaire, fils fixés le long de la surface de l'électrode, notamment par soudure.

5. Elément galvanique selon l'une des revendications 1 à 4, caractérisé par le fait que les pièces d'écartement (6, 7) sont constituées par des boutons isolés placés à une certaine distance les uns des autres.

6. Elément galvanique selon l'une des revendications 1 à 5, caractérisé par le fait que, à travers les pièces d'écartement (9) à l'intérieur du compartiment (8) réservé à l'électrolyte, des canaux de passage (10) sont formés pour l'électrolyte.

7. Elément galvanique selon l'une des revendications 1 à 6, caractérisé par le fait que les surfaces conductrices électriquement des électrodes sont pratiquement planes sans saillies ni creux.

8. Elément galvanique selon l'une des revendications 1 à 7, caractérisé par le fait que les pièces d'écartement sont réalisées en la même matière plastique, en particulier le polypropylène, que les électrodes.

9. Elément galvanique selon l'une des revendications 1 à 8, caractérisé par le fait que les pièces d'écartement (6, 7) sont réalisées de manière à s'effiler en forme de cône à partir de l'électrode.

Fig.1

Fig.2

Fig.3